Europäisches Patentamt

European Patent Office

Office européen des brevets

(11) Publication number: **0 465 912 A2**

## EUROPEAN PATENT APPLICATION

(21) Application number: **91110420.6**

(22) Date of filing: **24.06.91**

(51) Int. Cl.⁵: **C08J 7/04**, C09D 123/08, C09D 129/04, //C08L23:02

(30) Priority: **25.06.90 IT 2075790**

(43) Date of publication of application:
**15.01.92 Bulletin 92/03**

(84) Designated Contracting States:
**BE CH DE ES FR GB LI NL**

(71) Applicant: **Moplefan S.p.A.**
**31, Foro Buonaparte**
**Milan(IT)**

(72) Inventor: **Camprincoli, Pierpaolo, Dr.**
**73, Via Guglielmi**
**I-05100 Terni(IT)**
Inventor: **Cardaio, Rino, Dr.**
**3, Via Pleiadi-Cesi**
**I-05100 Terni(IT)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**W-8000 München 40(DE)**

(54) Gas and vapor barrier polyolefinic films.

(57) Described are polyolefinic films exhibiting improved imperviousness to gases and vapors, and being coated, on at least one of their surfaces with an ethylene-vinyl alcohol copolymer layer, said layer having been applied in the form of a hydro-alcoholic solution.

EP 0 465 912 A2

The present invention relates to polyolefinic films having improved imperviousness to gases, vapors and aromas and being particularly suitable for the manufacture of containers, envelopes, bags, vessels and generally articles which are prevailingly intended for use in packaging.

Films made from prevailingly isotactic alpha-olefins are known in literature.

In particular there are described polyolefinic films obtained from polypropylene, which essentially consists of macromolecules having an isotactic structure and is prepared by using stereospecific catalysts.

The mechanical, protective and optical properties of said films, and in particular of the polypropylene films, are such as to make them particularly suitable for being utilized in the field of packaging.

However, these films exhibit an imperviousness to gases and vapors, which is not completely satisfactory particularly for applications such as, e.g., the packaging of foodstuffs where a very high impermeability is required.

In order to improve the impermeability of polyolefinic films to gases, vapors and aromas, it is common practice to coat said films with materials having a strong barrier effect.

Various coating methods have been suggested such as, for example, extrusion of the barrier-effect material onto the substrate film in the molten state (extrusion coating), or coextrusion; "lamination" of two films with each other, either with or without interposed adhesives; or spreading the coating agent dissolved in a suitable solvent, optionally together with a primer which promotes the adhesion of the coating to the substrate. The primer treatment is often replaced or accompanied by a pretreatment of the substrate film with chemical agents, non-disruptive electric discharges, flames or the like.

As barrier-effect materials suitable for coating the polyolefinic films, several, prevailingly polymeric compounds have been proposed and described, which are generally applied in the form of solutions in organic or aqueous solvents, in the form of aqueous dispersions, or in the molten state (extrusion and coextrusion) (see US-A 4,501,797 and 4,572,854).

High barrier-effect materials are ethylene-vinyl alcohol copolymers, usually referred to as EVOH, which optionally also contain other comonomers (e.g. propylene).

However, said copolymers show a high cristallinity wherefore they give rise to stiff products which are difficult to orient.

Besides cast films, the ethylene-vinyl alcohol copolymers can be used for monoaxially and biaxially stretched films, but the achievable stretching ratios are usually too low for the polypropylene orientation, owing to the high crystallinity mentioned above.

This difference in the achievable and required, respectively, stretching ratios of EVOH and polypropylene makes it difficult to prepare in conventional manner an oriented film starting from a coextruded film of said two polymers.

The coextrusion of EVOH with a polyolefinic polymer furthermore requires the use of a coextrusion binding or adhesive polymer and therefore of another extruder or at least another step.

As is known, the ethylene-vinyl alcohol copolymers are products commercially available in the form of granules suitable for extrusion, coextrusion and injection molding.

Said copolymers are insoluble in common solvents such as water, methyl alcohol, ethyl alcohol, isopropyl alcohol, acetone, methylethylketone, ethyl acetate, ethyl ether, n-pentane, carbon tetrachloride, chloroform, benzene, etc.; therefore, the coating of polyolefinic films (e.g. polypropylene) with the gas and vapor barrier EVOH layer so far could be obtained only by means of coextrusion, involving the above drawbacks.

It has now been found that suitable solvents for the ethylene-vinyl alcohol copolymers are hydroalcoholic mixtures and that such solutions can be applied, by spreading, onto polyolefinic films, thereby forming coated and oriented films which are endowed with a high barrier to gases and aromas.

Thus, one object of the present invention are polyolefinic films coated, on at least one of their surfaces, with at least one layer of ethylene-vinyl alcohol copolymer (EVOH) which has been applied thereon in the form of a hydro-alcoholic solution.

The ethylene-vinyl alcohol copolymers (EVOH) utilized according to the present invention are preferably those which have an ethylene content of about 2 to about 60% by weight.

Generally, the solubility of these copolymers in the hydro-alcoholic mixtures does not exceed 20% by weight. Hydro-alcoholic solutions containing from 5% to 15% by weight of ethylene-vinyl alcohol copolymer are used preferably.

The alcoholic fraction of the hydro-alcoholic solvent generally comprises a lower aliphatic $C_1$-$C_5$ alcohol, provided that said alcohol is completely miscible with water. Particularly suitable alcohols are methyl, ethyl, n-propyl, isopropyl, tert.-butyl and allyl alcohols.

The hydro-alcoholic mixtures generally have an alcoholic fraction content ranging from about 30 to about 70% by weight, preferably about 50 to about 60% by weight.

The ethylene-vinyl alcohol copolymer in hydro-alcoholic solution is applied onto one or both sides of the polyolefinic substrate by means of any suitable method, such as spreading, immersion, spraying and the like. The excess solution can be removed by squeezing between rollers, or by a rotogravure system, a reverser system with metering bar, a metering blade system, etc.

The thickness of the applied layer is such as to impart the desired imperviousness to gases, vapors and aromas to the coated film. Total coating thicknesses ranging from about 0.5 to about 5 $\mu$m are preferred.

Besides the (pure) ethylene-vinyl alcohol copolymers, other copolymers of this type such as ethylene-propylene-vinyl alcohol copolymers and the reaction products of ethylene-vinyl alcohol copolymers with a lower (e.g. $C_1$-$C_5$) aldehyde or a lower (e.g. $C_1$-$C_5$) ketone, as described, for example, in DE-A-2,931,035 and US-A-4,212,936 are also suitable for coating polyolefinic films.

The polyolefinic film substrate may be composed of olefinic polymers and copolymers selected from a wide range of commercially available products. In particular there may be utilized, e.g., films obtained from olefinic polymers prepared by means of stereospecific catalysts, such as polypropylene essentially consisting of isotactic macromolecules, crystalline propylene/ethylene copolymers, both of the random type and of the block type, polyethylene or mixtures thereof.

Prior to the application of the EVOH coating, the surface of the substrate film is preferably treated in order to secure a perfect and strong adhesion of the coating to the film and to avoid detachment, generally known as "peeling". Said treatment can be carried out according to conventional techniques, for example by means of an electric discharge, a flame treatment, an oxidizing treatment with chemical reagents, etc.

The coating materials of the present invention can be applied onto unoriented films and onto monoaxially or biaxially oriented films with a stretching ratio ranging from about 2 to about 20, preferably from about 3 to about 10.

When a stronger adhesion of the coating to the substrate film as compared with that obtainable by means of the above treatments is required, it is possible to utilize an interposed coating in the form of a primer, which increases the adhesion of the coating to the film surface.

In such a case, after the film has been treated according to one or more of the above methods, preferably with electric discharges, a continuous layer of primer is applied onto the surface of the treated film. The use of said primers is well known. Preferably, polyethylene imine is utilized, which is applied onto the substrate film, in the form of a solution, by means of conventional techniques, for example by using a usual spreading machine for thin sheets. There may also be utilized, e.g., polyurethane type compounds, aliphatic diepoxides and/or functional organo-silanes, said materials being utlizable alone or in admixture with one another and/or with polyethylene imine.

Examples of suitable polyurethane compounds are ADCOTE® 31A37 and ADCOTE® 376, with the relevant catalysts, which are produced and marketed by Morton Chem. E.

Among the aliphatic diepoxides, ethylene glycol diglcidylether and propylene glycol diglycidylether are particularly preferred.

A particularly suitable functional organo-silane is aminoethyl-gamma-aminopropyl trimethoxysilane.

Superimposed layers of the above primers have proved to be particularly advantageous.

In order to prevent the tendency of the films to adhere to each other when the surfaces are held reciprocally compressed, such as in the case of rolls, it is common practice to add anti-adhesion products, known as antiblocking agents, to the coating materials. These antiblocking agents are generally composed of waxes or wax-like materials, which melt at higher temperatures than the storage temperature. These products are required to not be soluble, at the storage temperature, in the coating agent. Specific examples are natural waxes, microcrystalline waxes, carnauba wax, Japanese wax, Montan wax and the like, as well as synthetic waxes such as hydrogenated beaver oil, chlorinated hydrocarbon waxes and amides of aliphatic acids with long-chain alkyl groups.

Prior to extrusion or film-forming, stabilizers, lubricants, pigments, dyestuffs, antistatic agents, plasticizing fillers and the like can be added to the polymer.

After the substrate film has been extruded, according to conventional extrusion techniques, the film is heated and optionally oriented by means of stretching in one direction or in both directions and, after having been subjected to surface treatments of the type described hereinbefore, it is coated with the coating polymer of the present invention.

The resulting films can be used, in particular, as components of laminated materials, including multilaminated materials, and as bonded materials. Moreover, said film can be further coated with enamels, special waterproof protective layers, thermoregulating layers, etc., depending on the intended final use.

Before being utilized in the preparation of laminated and bonded articles, the film can also be coated with a metal layer, in particular an aluminium layer, applied by vacuum metallization, which further improves the impermeability of the film to gases, vapors and aromas.

The following characteristics of the coated films of the present invention have been used to evaluate their performance.

a) Degree of adhesion of the coating to the supporting or substrate film ("scotchtape test"): Determined by placing a pressure-adhesive cellulose tape onto the surface of the coated film, and then immediately stripping said tape from said surface. The coatings endowed with a good adhesion remain firmly attached to the substrate film, while those having a poor or bad adhesion are removed from the substrate film completely or partially.

In the following examples, the adhesion degree was evaluated according to a rating scale from 0 to 5. 0 indicates that the coating is removed completely; 5 indicates the absence of any detachment; the intermediate numbers indicate partial detachment of the coating.

b) Degree of imperviousness to gases, vapors and aromas: Determined by measuring the permeability to oxygen according to ASTM-D 1434.

c) Peeling resistance of the laminate or detachment resistance fo the two films of the laminate, one of which being the coated film of the present invention, measured according to the following method: A polyolefin film is laminated, by means of interposition of a polyurethane adhesive, with the coated film of the present invention, the coated surface thereof facing the other film. Subsequently, the two films are stripped, and the force necessary for detachment is measured by means of an Instrom dynamometer.

d) Melt index: Determined according to ASTM-D 1238 65T.

The following examples illustrate the present invention without being, however, a limitation thereof.

EXAMPLE 1

There was prepared a solution of ethylene-vinyl alcohol copolymer in a mixture of water and isopropyl alcohol (50 parts by weight of water and 50 parts by weight of alcohol) in the following manner, using a commercial granular copolymer (Clarene® L, Solvay Co.) containing 21% by weight of ethylene.

Into a 2 I-pyrex glass flask equipped with stirrer, thermometer and reflux cooler, there were introduced, at room temperature:

| - water | 450 g |
| - isopropyl alcohol | 450 g |
| - Clarene® L | 100 g. |

The mixture was heated, under stirring, to reflux and was maintained at reflux, always under stirring, for three hours; a homogeneous solution of Clarene® L was thus obtained.

A biaxially oriented polypropylene film, obtained from polypropylene having a melt index of 2, a residue of the extraction with heptane of 98.2% and 45 ppm of ashes and showing a stretch ratio in longitudinal and transverse direction of 1:4.4 and 1:8, respectively, and a thickness of 25 $\mu$m after stretching was subjected to a treatment with continuous non-disruptive electric discharges.

The thus treated film was coated on one side, by means of a conventional spreading machine, with a 10% solution, in ethyl acetate, of polyurethane primer ADCOTE® 31A37 in combination with 3% of hardener (Catalest® F, manufactured and marketed by Morton Chem.E.).

The film was then dried in an oven and coated with a second layer of ethylene-vinyl alcohol copolymer obtained by spreading the above-mentioned solution in water-isopropyl alcohol.

After spreading and drying at 130°C, the coated film had a thickness of 0.8 $\mu$m and exhibited the characteristics indicated in the following table.

EXAMPLE 2

Example 1 was repeated with the only exception that ethyl alcohol was utilized instead of isopropyl alcohol.

The resulting coated film exhibited the characteristics indicated in the following table.

EXAMPLE 3

Example 1 was repeated with the exception that as substrate film there was used a multi-layer film consisting of an inner layer of polypropylene having a melt index of 2, a residue of the extraction with heptane of 98.2% and 45 ppm of ashes, and of two outer layers of a random propylene/ethylene copolymer

4

having an ethylene content of 4.2% by weight and a melt index of 5.

The multi-layer film was then oriented and subjected to the electric discharge treatment as described in example 1.

The coating thickness was 1 $\mu$m.

The obtained coated film exhibited the characteristics indicated in the following table.

EXAMPLE 4

Example 1 was repeated, but using a different primer: The coating with the polyurethane primer was replaced by a double coating obtained by first spreading a 1% aqueous solution of polyethylene imine and then a 1% aqueous solution of propylene glycol diglycidyl ether over the film.

The resulting coated film exhibited the characteristics indicated in the table below.

EXAMPLE 5

Example 4 was repeated by using an aqueous solution at 1% of aminoethyl-gamma-aminopropyl trimethoxysilane instead of the propylene glycol diglycidyl ether solution.

The resulting coated film exhibited the characteristics indicated in the table below.

EXAMPLES 6 TO 10

The coated films of examples 1 to 5 were subsequently laminated, by interposition of a polyurethane adhesive and subsequent squeezing between rolls, with the following polyolefinic films, the ethylene-vinyl alcohol copolymer coating facing the other polyolefinic film:

6. The coated film of example 1 was laminated with the starting biaxially oriented multilayer film of example 3.

7. The coated film of example 2 was laminated with the starting biaxially oriented multilayer film of example 3.

8. The coated film of example 3 was laminated with the starting biaxially oriented polypropylene film of example 1.

9. The coated film of example 4 was laminated with the starting biaxially oriented polypropylene film of example 1.

10. The coated film of example 5 was laminated with a polyethylene film having a thickness of 30 $\mu$m.

The characteristics of the resulting bonded materials are reported in the following table.

5

T A B L E

| Ex. No. | Coating thickness in $\mu$m | Ad- hesion | Resistance to peeling of the bonded material | Permeability to oxygen at 25°C and 0% of R.H. ($cm^3/m^2$ x 24h x Atm.) |
|---|---|---|---|---|
| 1 | 0,8 | 3 | - | 16 |
| 2 | 0,8 | 3 | - | 16 |
| 3 | 1,0 | 5 | - | 10,5 |
| 4 | 1,0 | 5 | - | 11 |
| 5 | 1,0 | 4 | - | 11,5 |
| 6 | 0,8 | - | 100 | 15 |
| 7 | 0,8 | - | 90 | 15 |
| 8 | 1,0 | - | 210 | 10 |
| 9 | 1,0 | - | 200 | 10 |
| 10 | 1,0 | - | 180 | 11 |

## Claims

1. Polyolefinic films having a gas and vapor barrier and comprising a polyolefinic film, coated on at least one side thereof with at least one layer of an ethylene-vinyl alcohol copolymer which has been applied in the form of a hydro-alcoholic solution.

2. Films according to claim 1, wherein the alcoholic fraction of the hydro-alcoholic mixture comprises an aliphatic $C_1$-$C_5$ alcohol, preferably selected from methyl, ethyl, n-propyl, isopropyl, tert-butyl, allyl alcohol and mixtures thereof.

3. Films according to any one of the preceding claims, wherein the alcohol content in the hydro-alcoholic mixture ranges from about 30 to about 70, preferably about 50 to about 60% by weight.

4. Films according to any one of the preceding claims, wherein the ethylene-vinyl alcohol copolymer has an ethylene content of from about 2 to about 60% by weight.

5. Films according to any one of the preceding claims, wherein the thickness of the ethylene-vinyl alcohol copolymer layer(s) ranges from about 0.5 to about 5 $\mu$m.

6. Films according to any one of the preceding claims, wherein the ethylene-vinyl alcohol copolymer is selected from ethylene-propylene-vinyl alcohol copolymers and the reaction products of ethylene-vinyl alcohol copolymers and lower aldehydes and/or lower ketones.

7. Films according to any one of the preceding claims, wherein the hydro-alcoholic ethylene-vinyl alcohol copolymer solution has been applied by means of spreading, immersion or spraying.

8. Films according to any one of the preceding claims, wherein the polyolefinic substrate is selected from isotactic polypropylene, crystalline random or block copolymers of ethylene and propylene, polyethylene and mixtures thereof.

9. Films according to any one of the preceding claims, wherein the olefinic substrate comprises an unoriented or monoaxially or biaxially oriented film with a stretching ratio ranging from about 2 to about 20.

10. Films according to any one of the preceding claims, wherein the film, prior to the application of the coating, has been subjected to an electric discharge, a flame treatment and/or an oxidizing treatment and/or a continuous primer layer has been applied thereon, said primer being preferably selected from polyethylene imine, polyurethanes, aliphatic diepoxides, functional organosilanes or mixtures thereof, e.g., in the form of superimposed layers.

11. Films according to any one of the preceding claims which are additionally coated with metal layers and/or enamels and/or protective layers.

12. Use of the polyolefinic films according to any one of the preceding claims as components of laminated or bonded materials.